# EUROPÄISCHE PATENTANMELDUNG

(11) **EP 0 960 791 A2**
(43) Veröffentlichungstag der Anmeldung: **01.12.1999**
(21) Anmeldenummer: 99101972.0
(22) Anmeldetag: 01.02.1999
(51) Int. Cl.: B60T 7/06, B60T 11/04

(54) **Vorrichtung zur Bremsbetätigung**

(30) Priorität: 29.05.1998 DE 19824179
(71) Anmelder: MaK System Gesellschaft mbH, 24159 Kiel (DE)
(72) Erfinder: Nowak, Harald, 24864 Goltoft (DE)
(74) Vertreter: Hansmann, Dierk, Dipl.-Ing.

(57) **Zusammenfassung**

Es ist bei einer Vorrichtung zur Bremsbetätigung über ein Bremspedal für Fahrzeuge vorgesehen, abhängig von einem aufgebrachten Pedalweg eine überproportional größere Wirkkraft auf einen Bremszug in Bezug auf die Pedalkraft aufzubringen. Hierzu ist im Abstand zum fahrzeugfesten Lager des Bremspedals eine Druckstange angelenkt, die auf ein verschiebbar geführtes Mitnehmerstück einwirkt, das mit einem Bremszug verbunden ist.

## Beschreibung

Die Erfindung bezieht sich auf eine Vorrichtung zur Bremsbetätigung über ein fahrzeugfest angelenktes Bremspedal und einer Bremszuganlenkung und -betätigung für einen im Fahrzeug örtlich entfernten Bremshauptzylinder.

In Sonderfahrzeugen, wie auch Panzerfahrzeugen, ist der Bauraum für Bedienelemente am Fahrerplatz oft begrenzt und durch andere Funktionen, wie Panzerschutz, Notausstieg, eingeschränkt. Dennoch darf die ergonomisch optimale Ausgestaltung des Fahrerplatzes einschließlich der Bedienelemente keine Einschränkung erfahren, da der Fahrer das Fahrzeug sicher und ermüdungsfrei führen soll. Da der Hauptbremszylinder als Stellelement für die Bremse wegen des beschränkten Bauraums entfernt vom Fußraum und nicht in direkter Nähe des Bremspedals untergebracht werden kann, wird ein Betätigungszug als Bremszug eingesetzt, der die kraftübertragende Verbindung vom Bremspedal zum Hauptbremszylinder herstellt.

Ausgegangen wird von einem hydraulischen oder pneumatischen Zweikreisbremssystem mit einem Tandemhauptzylinder als Ansteuerelement für die Bremse. Dieses System hat die Eigenschaft, daß bei Ausfall eines Bremskreises ein Pedalleerweg entsteht und eine höhere Pedalkraft für eine ausreichende Bremskrafterzeugung aufgebracht werden muß, da die Geberzylinder im Hauptzylinder in Tandemanordnung hintereinander geschaltet sind.

Bekannt sind Lösungen, bei denen der Bremszug über einen geeignet abgewinkelten und mit dem Pedal verbundenen Umlenkhebel angelenkt wird. Entsprechend den Hebelverhältnissen vom Bremspedal und Umlenkhebel ergibt sich eine Pedalbetätigungskraft als Eingangsgröße für das Bremssystem, die aufgrund der festen Hebelverhältnisse linear proportional ansteigt.

Aufgabe der Erfindung ist es, für eine gattungsgemäße Anordnung eine ergonomisch angepaßte Pedalkraft als Eingangsgröße für ein Zweikreisbremssystem zu erzeugen, wenn bei Ausfall eines Bremskreises ein Pedalleerweg entsteht.

Die Lösung dieser Aufgabe erfolgt erfindungsgemäß durch die kennzeichnenden Merkmale des Anspruches 1.

Weitere vorteilhafte Ausgestaltungen sind durch die Merkmale der Unteransprüche gekennzeichnet.

Die hierdurch erzielten Vorteile bestehen darin, daß durch die Vorrichtung eine Pedalkraft erzeugt wird, die bei fortschreitendem Pedalweg überproportional größer wird, so daß eine ausreichende Bremskraft für alle Betriebszustände in einem nachgeschalteten Zweikreisbremssystem aufgebracht wird. Gleichzeitig wird durch die Vorrichtung ein kleiner kompakter Bauraum beansprucht und die Lagerkräfte am Bremspedal und den betreffenden Lagerstellen werden gering gehalten.

Hierbei ist ein Mitnehmerstück linear verschieblich in einer fahrzeugfesten Führungsschiene, die in Richtung nach vorn des Pedals verläuft und einen bestimmten Winkel mit dem Pedal bildet. An dem Mitnehmerstück ist ein Bremszug, der in Verlängerung der Führungsschiene nach hinten in das Fahrzeug verläuft, an einer Lagerung angelenkt. Das Mitnehmerstück und der Bremszug sind vorzugsweise in einer horizontalen Ebene angeordnet.

In Ruhestellung bildet die Druckstange mit der Führungsschiene einen Winkel, wodurch bei Aufbringen einer Pedalkraft diese Kraft im Anlenkpunkt der Druckstange an dem Mitnehmerstück in eine Komponente senkrecht zur Führungsschiene und in eine Komponente parallel zur Führungsschiene aufgespalten wird.

Bei Aufbringen einer größeren Pedalkraft und damit eines größeren Pedalweges wandert das verschiebliche Mitnehmerstück nach vorne unter Mitnahme des Bremszuges, der die Gegenkraft aufbringt und der Winkel zwischen Druckstange und Führungsschiene wird aufgrund der geometrischen Verhältnisse und des Pedalweges verkleinert. Hierdurch wird nach einer Vektorenaufspaltung der Pedalkraft der Kraftanteil in Richtung der Führungsschiene größer, wobei die Lagerbelastung im Verschiebeelement der Führungsschiene als Kraftkomponente senkrecht zur Führungsschiene annähernd konstant bleibt. Damit wird erreicht, daß die auf den Bremszug wirkende Kraft abhängig von einem aufgebrachten Pedalweg überproportional - in Bezug auf die aufgebrachte Pedalkraft größer wird - und daß die verschiebliche Lagerstelle an der Führungsschiene keine erhöhte Lagerbelastung erfährt. Die Anordnung besteht außerdem aus nur wenigen wartungsfrei ausführbaren Teilen und kann platzsparend aufgebaut werden.

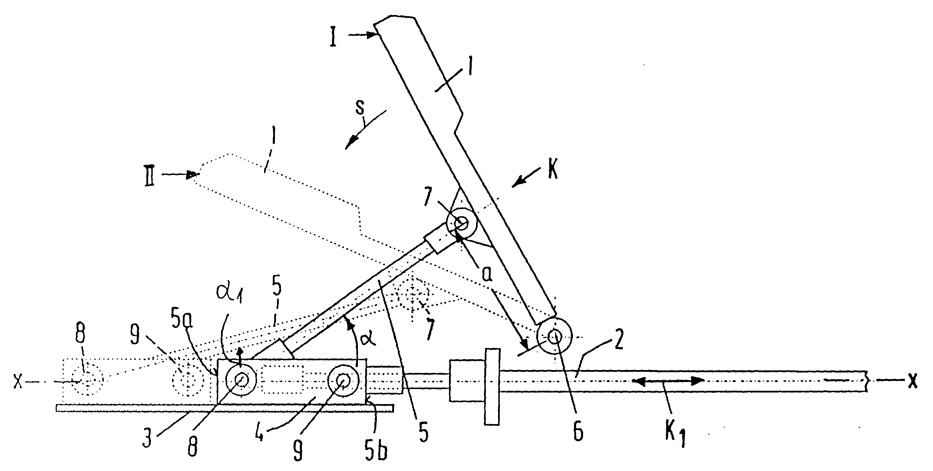

Ein Ausführungsbeispiel der Erfindung ist in der Zeichnung schematisch dargestellt, wobei eine Seitenansicht der Vorrichtung gezeigt ist.

Die Vorrichtung besteht im wesentlichen aus einem Bremspedal 1, mit einer angelenkten Druckstange 5 und einem mit der Druckstange 5 verbundenen Mitnehmerstück 4, das in einer fahrzeugfesten Führungsschiene 3 verschiebbar gehalten ist. Mit dem Mitnehmerstück 4 ist ein Bremszug 2 verbunden, der vorzugsweise in einer Ebene X-X mit dem Mitnehmerstück 4 angeordnet ist.

Das Bremspedal 1 ist in einer fahrzeugfesten Lagerung 6 drehbar gehalten und weist an seiner Rückseite eine Lagerung 7 für die Druckstange 5 auf. Das abgekehrte Ende der Druckstange 5 ist über eine Lagerung 8 mit einem Mitnehmerstück 4 verbunden, das längsverschieblich in der etwa waagerecht angeordneten Führungsschiene 3 geführt wird.

Der Bremszug 2 ist mittels eines Lagers 9 am Mitnehmerstück 4 in Richtung der Verlängerung der Führungsschiene 3 angelenkt. Die Druckstange 5 und die Führungsschiene 3 bilden in der Ruhestellung I des Pedals 1 einen Winkel α, der bei Aufbringung einer Pedalkraft K und eines Pedalweges s in Pedalkraftrichtung zur Stellung II mit dem Winkel α verkleinert wird, wobei ein überproportionaler Pedalkraftanteil als Wirkkraft Kl auf den Bremszug 2 bei wachsendem Pedalweg aufgebracht wird.

## Patentansprüche

1. Vorrichtung zur Bremsbetätigung über ein fahrzeugfest angelenktes Bremspedal und einer Bremszuganlenkung und -betätigung für einen im Fahrzeug örtlich entfernten Bremshauptzylinder, dadurch gekennzeichnet, daß das Bremspedal (1) mit einer Druckstange (5) verbunden ist, die in einem Abstand (a) zum fahrzeugfesten Lager (6) des Bremspedals (1) über ein Lager (7) angelenkt und andererseits an einem in einer fahrzeugfesten Führungsschiene (3) verschiebbar geführten Mitnehmerstück (4) angelenkt ist, daß mit einem Bremszug (2) verbunden ist.

2. Vorrichtung nach Anspruch 1, dadurch gekennzeichnet, daß das Mitnehmerstück (4) und der Bremszug (2) in einer Ebene (X-X) gemeinsam verstellbar angeordnet sind.

3. Vorrichtung nach Anspruch 1 oder 2, dadurch gekennzeichnet, daß die Druckstange (5) zur Führungsschiene (3) unter einem Winkel α angeordnet ist und beim Verschwenken des Bremspedals (1) in Richtung der Führungsschiene (3) verkleinert wird.

4. Vorrichtung nach einem der Ansprüche 1 bis 3, dadurch gekennzeichnet, daß die Druckstange (5) an einem hinteren Ende (5a) des Mitnehmerstückes (4) und der Bremszug (2) an einem vorderen Ende (5b) jeweils über Lager (8,9) gehalten werden.

5. Vorrichtung nach einem der Ansprüche 1 bis 4, dadurch gekennzeichnet, daß bei einem sich verkleinernden Winkel α zwischen der Druckstange (5) und der Führungsschiene (3) der Kraftanteil in Richtung der Führungsschiene (3) vergrößerbar ist.

6. Vorrichtung nach einem der Ansprüche 1 bis 5, dadurch gekennzeichnet, daß das Mitnehmerstück (4) aus einem wartungsarmen und selbstschmierenden Werkstoff gebildet ist.
